# EUROPÄISCHE PATENTSCHRIFT

(11) **EP 0 300 302 B1**
(45) Veröffentlichungstag und Bekanntmachung des Hinweises auf die Patenterteilung: **06.10.1993**
(21) Anmeldenummer: 88111021.7
(22) Anmeldetag: 11.07.1988
(51) Int. Cl.: C09J 5/02, C09J 11/00, C09J 201/02, C09K 3/10

(54) **Klebeverfahren für wasserdampfundurchlässige Substrate**
Bonding method for substrates impervious to steam
Procédé de collage pour substrats imperméables à la vapeur d'eau

(30) Priorität: 20.07.1987 DE 3723932
(43) Veröffentlichungstag der Anmeldung: 25.01.1989
(73) Patentinhaber: Henkel Kommanditgesellschaft auf Aktien, 40191 Düsseldorf (DE)
(72) Erfinder: Schulte, Heinz-Günther, Dr., D-4330 Mülheim 13 (DE); Tauber, Günter, Dr., D-4000 Düsseldorf 13 (DE); Pille-Wolf, Wolfgang, Dr., D-4010 Hilden (DE)

(56) Entgegenhaltungen:
- GB-A- 2 040 976

## Beschreibung

Die Erfindung betrifft ein Verfahren zum Verkleben und Abdichten von wasserdampfundurchlässigen Substraten mit unter Feuchtigkeitseinwirkung nachvernetzenden Schmelzklebstoffen bzw. Dichtmassen. Schmelzkleber erfreuen sich in der Klebetechnik steigender Beliebtheit, da sie mangels Lösungsmittel keine Umweltprobleme bei der Bearbeitung verursachen und darüberhinaus für Produktionsvorgänge mit kurzen Taktzeiten geeignet sind. Die ursprünglichen Nachteile der Schmelzklebersysteme, nämlich die geringe Temperaturbelastbarkeit der Verklebungen, konnten in neueren Entwicklungen dadurch behoben werden, daß als Schmelzkleber Reaktivsysteme eingesetzt werden, die beim Aufschmelzen unter Molekülaufbau reagieren und dabei zu Stoffen führen, die ein zweites Mal nicht oder nur bei einer wesentlich höheren Temperatur aufgeschmolzen werden können.

Eine besonders wichtige Gruppe derartiger reaktiver Schmelzklebstoffe sind die feuchtigkeitsvernetzenden Schmelzkleber. Unter feuchtigkeitsvernetzenden Schmelzklebern versteht man im allgemeinen lösemittelfreie Klebstoffe, die nach dem Auftragen auf ein Substrat ihre Endfestigkeit und Wärmestandfestigkeit erreichen, indem sie mit Wasser aus der Atmosphäre oder dem Substrat nachhärten.

Weiterhin ist bekannt, daß man feuchtigkeitshärtende Schmelzkleber erhalten kann, wenn man freie NCO-Gruppen von Prepolymeren mit alpha-Aminoalkyl-trialkoxysilanen umsetzt, wobei die Aushärtung dann über die Si(OR)₃-Endgruppen erfolgt, vgl. H.F. Huber, H. Müller, 11. Münchener Klebstoff- und Veredelungsseminar, Oktober 1986. In diesem Vortrag wurde auch ein feuchtigkeitshärtender Schmelzkleber vorgestellt, der aus einem Polyester als Grundgerüst mit freien OH-Gruppen aufgebaut wurde, und zwar in der Weise, daß die OH-Gruppen zunächst mit mehrfunktionellen Isocyanaten im Überschuß umgesetzt wurden. Die dann vorhandenen freien NCO-Gruppen wurden anschließend mit alpha-Aminoalkyl-trialkoxysilanen zu sogenannten Silanschmelzklebstoffen umgesetzt.

Ein Nachteil derartiger Schmelzklebstoffe besteht jedoch darin, daß die Härtungsreaktion nicht oder nicht vollständig ablaufen kann, wenn die zu verklebenden Substrate wasserdampfundurchlässig sind. Man hat daher bereits in der DE-A 34 12 884 versucht, diesen Mangel mit Hilfe eines Primers, im wesentlichen einer Lösung von Hexamethylentetramin in Aceton, zu beseitigen. Der Einsatz eines solchen Primers liefert jedoch insbesondere bei Silan- oder Siloxan-vernetzenden Systemen meist unbefriedigende Ergebnisse. Zudem tritt durch das Amin eine in der Praxis störende Geruchsbelästigung auf.

Eine analoge Problematik findet sich auf dem Gebiet der Fugendichtmassen. Eine wichtige Gruppe von Fugendichtmassen sind die Polyurethanprepolymere enthaltenden Mischungen, die unter Einwirkung der Luftfeuchtigkeit nachvernetzen und somit aushärten. Die in Polyurethan-Fugendichtmassen verwendeten Polyurethanprepolymeren entsprechen in ihrem Grundaufbau den Polyurethanprepolymeren, wie sie auch für Schmelzklebstoffe verwendet werden.

Beim Verarbeiten von unter Feuchtigkeitszutritt nachvernetzenden Polyurethan-Fugendichtmassen werden dann ungenügende Durchhärtung oder unbefriedigend lange Durchhärtungszeiten beobachtet, wenn die abzudichtenden Fugen durch wasserdampfundurchlässige Substrate begrenzt werden.

Aufgabe der Erfindung ist es daher, ein Verfahren bereitzustellen, das es erlaubt, wasserdampfundurchlässige Substrate fehlersicher mit unter Feuchtigkeitszutritt nachvernetzenden Schmelzklebern zu verkleben und Fugen mit unter Feuchtigkeitszutritt nachvernetzenden Fugendichtmassen abzudichten.

Gegenstand der Erfindung ist daher ein Verfahren zum Verkleben und/oder Abdichten von wasserdampfundurchlässigen Substraten mit unter Feuchtigkeitseinwirkung nachvernetzenden Schmelzklebstoffen oder Fugendichtmassen, dadurch gekennzeichnet, daß man in einem ersten Verfahrensschritt Aktivatormaterial als Festsubstanz oder in einem Lösungsmittel, gewünschtenfalls in Gegenwart von Stabilisatoren, suspendiert oder gelöst auf zumindest eine der zu verklebenden Substratoberflächen aufbringt und anschließend das Lösungsmittel, so vorhanden, durch Trocknen entfernt und danach in üblicher Weise einen Schmelzkleber oder eine Fugendichtmasse einsetzt, wobei als Aktivatormaterial eine bei Verarbeitungstemperaturen zur Abgabe von 0,5 bis 25 Gew.-% chemisch oder adsorptiv gebundenem Wasser befähigte Substanz eingesetzt wird.

Als Aktivatormaterial für das erfindungsgemäße Verfahren sind Substanzen geeignet, die in einer bevorzugten Ausführungsform des erfindungsgemäßen Verfahrens zwischen 1 und 10 Gew.-% gebundenes Wasser abgeben. Als Aktivatormaterial für das erfindungsgemäße Verfahren können sowohl anorganische als auch organische Substanzen verwendet werden, die Wasser physikalisch oder chemisch gebunden enthalten und dieses bei Raumtemperatur oder bei Erhitzen wieder abgeben. Als anorganische Aktivatormaterialien für das erfindungsgemäße Verfahren sind daher kristallwasserhaltige, lufttrockene Oxide, Hydroxyde oder Salze der Alkalimetalle, Erdalkalimetalle sowie von Metallen der dritten Hauptgruppe geeignet, ferner kristallwasserhaltige, lufttrockene Oxide, Hydroxide oder Salze von Nebengruppenelementen. Bevorzugt werden solche Substanzen eingesetzt, die Kristallwasser im Temperaturbereich von 80 bis 180 °C abgeben und in größeren Mengen gut zuganglich sind. Ein weiterer Gesichtspunkt für die Auswahl des Aktivatormaterials ist, daß die Substanzen möglichst umweltverträglich sind. Besonders bevorzugte kristallwasserhaltige Metallsalze für das erfindungsgemäße Verfahren sind Eisensulfat (FeSO₄ x 7 H₂O), Bariumhydroxid (Ba(OH)₂ x 8 H₂O), Calciumsulfat (CaSO₄ x 2 H₂O), Kupfersulfat (CuSO₄ x 5 H₂O), Magnesiumphosphat ((Mg)₃(PO₄)₂ x 4 H₂O), Natriumsilikat (Na₂SiO₃ x 9 H₂O), Kupferacetat (Cu(CH₃COO)₂ x 2 H₂O), Natriumcarbonat (Na₂CO₃ x 12 H₂O), Natriumphosphat (Na₃PO₄ x 12 H₂O), Natriumsulfat (Na₂SO₄ x 10 H₂O), Calciumlactat (Ca(CH₃-CH(OH)-COO)₂ x 5 H₂O).

Eine weitere Klasse von Substanzen, die in dem erfindungsgemäßen Verfahren als Aktivatormaterial eingesetzt werden können, sind anorganische Verbindungen, die Strukturen ausbilden, die Hohlräume oder Kanäle enthalten, in denen Wasser gebunden oder eingelagert wird, das bei Raumtemperatur im wesentlichen dort verbleibt und erst oberhalb Raumtemperatur oder im Vakuum in größerem Umfang wieder abgegeben wird. Beispiele für solche Verbindungen sind Zeolithe, die üblicherweise als Ionenaustauscher oder Molekularsiebe verwendet werden. Aus dieser Klasse wird Zeolith A besonders bevorzugt.

In einer weiteren Ausführungsform des erfindungsgemäßen Verfahrens werden als Aktivatormaterial gebundenes Wasser enthaltende hydrophile Polymere verwendet. Bevorzugte Substanzen im Rahmen dieser Stoffklasse sind Cellulosederivate Stärkederivate, Polyacrylamid und/oder Polyvinylpyrrolidon.

Es kann im Rahmen des erfindungsgemäßen Verfahrens bevorzugt sein, das Aktivatormaterial in einem Lösungsmittel gelöst oder suspendiert auf zumindest eine der zu verklebenden Substratoberflächen aufzubringen. Unter Suspensionen sollen im Rahmen dieser Anmeldung Systeme aus einem oder mehreren Lösungsmitteln und unlöslichen Feststoffteilchen verstanden werden, wobei diese Systeme nicht hinsichtlich der Größe der unlöslichen Feststoffteilchen beschränkt sein sollen, wie häufig durch gezielte Wahl unterschiedlicher Begriffe wie Suspensionen, Dispersionen oder kolloidale Lösungen ausgedrückt wird. Die Wahl des geeigneten Lösungsmittels ist dabei abhängig von den Lösungseigenschaften des Aktivatormaterials. Zur Herstellung von Dispersionen wasserunlöslicher Aktivatormaterialien bzw. Lösungen wasserlöslicher Aktivatormaterialien wird bevorzugt Wasser verwendet. Die entsprechenden wäßrigen Lösungen oder Dispersionen des Aktivatormaterials enthalten dabei 1 bis 90, vorzugsweise 10 bis 50, und besonders bevorzugt 10 bis 20 Gew.-% an Aktivatormaterial.

Als organische Dispersions- bzw. Lösungsmittel für das Aktivatormaterial werden vorzugsweise alphatische Alkohole mit 1 bis 5 Kohlenstoffatomen oder aliphatische Ketone mit 3 bis 5 Kohlenstoffatomen eingesetzt. Besonders bevorzugte organische Lösungs- bzw. Dispersionsmittel sind Aceton und Propanol.

Für den Fall, daß das Aktivatormaterial in einem Lösungsmittel dispergiert auf die Substratoberfläche aufgebracht werden soll, kann die Dispersion weitere Substanzen enthalten. Diese Substanzen dienen dabei sowohl als Stabilisatoren zur Verbesserung der Lagerfähigkeit der Dispersion als auch zur Einstellung der Viskosität der Dispersion in vorteilhafter Weise dahingehend, daß eine bessere Dosierbarkeit beim Auftragen der Dispersion auf die zu verklebenden Substratoberflächen erzielt wird. Als Stabilisatoren für wäßrige Dispersionen werden bevorzugt wasserlösliche Polymere mit verdickender Wirkung, insbesondere Celluloseether oder Polyvinylalkohol, eingesetzt. Zur Verbesserung der Lagerfähigkeit von Dispersionen in organischen Lösungsmitteln bzw. als Verdickungsmittel zur Einstellung der Viskosität können in dem jeweiligen Lösungsmittel lösliche Polymere zugesetzt werden. Bevorzugte Stabilisatoren sind Celluloseester beispielsweise Celluloseacetobutyrat.

Auch Kieselsäure ist in dem erfindungsgemäßen Verfahren als Verdickungsmittel für Dispersionen des Aktivatormaterials einsetzbar.

In einer bevorzugten Ausführungsform des erfindungsgemäßen Verfahrens wird das Aktivatormaterial in solchen Mengen eingesetzt, daß zumindest 50 % der zu verklebenden Substratoberfläche nicht mit Aktivatormaterial belegt ist. Es kann dabei besonders bevorzugt sein, daß die nicht mit Aktivatormaterial belegte zu verklebende Substratoberfläche mehr als 80 % der insgesamt zu verklebenden Substratoberfläche beträgt.

Das Aktivatormaterial kann als Festsubstanz vorliegen. Wird es in dieser Form direkt im erfindungsgemäßen Verfahren eingesetzt, so kann die gewünschte Oberflächenbelegung über die aufgetragene Materialmenge gesteuert werden.

In einer weiteren Ausführungsform des erfindungsgemäßen Verfahrens wird das Aktivatormaterial in einem Lösungsmittel dispergiert auf die zu verklebende Substratoberfläche aufgebracht. Die Flächenbelegung mit dem Aktivatormaterial auf der zu verklebenden Substratoberfläche läßt sich in diesem Fall sowohl durch die aufgetragene Menge der Dispersion, als auch durch die Menge des Aktivatormaterial in der Dispersion einstellen.

In einer weiteren Ausführungsform des erfindungsgemäßen Verfahrens wird das Aktivatormaterial in einem Lösungsmittel gelöst auf die zu verklebende Substanzoberfläche aufgebracht. Auch in diesem Fall läßt sich die Oberflächenbelegung auf der zu verklebenden Substratoberfläche sowohl durch die Konzentration des Aktivatormaterials in der Lösung als auch durch die Menge der auf die Substratoberfläche aufgetragenen Lösung steuern.

Ebenfalls kann es bevorzugt sein, das Aktivatormaterial zunächst in wasserfreier Form als Festsubstanz oder in einem organischen Lösungsmittel dispergiert auf die zu verklebende Substratoberfläche aufzubringen. Die mit dem wasserfreien Aktivatormaterial belegte Substratoberfläche wird anschließend, ggf. nach dem Entfernen des Lösungsmittels durch Trocknen, an Luft gelagert, wobei das Aktivatormaterial die für das erfindungsgemäße Verfahren notwendige Wassermenge aufnimmt. Erst danach erfolgt der Einsatz des Schmelzklebstoffes bzw. der Fugendichtmasse.

Das erfindungsgemäße Verfahren kann zur Erhöhung der Haftfestigkeit von praktisch allen feuchtigkeitsvernetzenden Schmelzklebstoffen und Fugendichtmassen bei wasserdampfundurchlässigen Substraten eingesetzt werden.

Es ist daher nicht auf die im folgenden aufgeführten Schmelzklebstoff- und Fugendichtmassen-Systeme beschränkt, die in bevorzugten Ausführungsformen Verwendung finden.
Die heute bekannten feuchtigkeitshärtenden Schmelzklebstoffe sind thermoplastische Polymere, die Isocyanat- und/oder Silan- und/oder Siloxanendgruppen enthalten.

Hergestellt werden solche Polyurethan-Schmelzklebstoffe üblicherweise durch Umsetzung von Polyolen mit einem Überschuß an Diisocyanaten unter Ausschluß von Feuchtigkeit. Als Diisocyanat-Komponente zum Aufbau von Polyurethanen werden in den meisten Fällen aromatische Diisocyanate verwendet. Beispiele hierfür sind 2,4-Toluylendiisocyanat, 2,6-Toluylendiisocyanat, Isomerengemische von 2,4- und 2,6-Toluylendiisocyanat, Diphenylmethan-4,4′-Diisocyanat und 1,5-Naphthylen-Diisocyanat. Dagegen spielen aliphatische Diisocyanate, wie das 1,6-Hexan-Diisocyanat, eine deutlich kleinere Rolle. Als Polyisocyanate werden Substanzen wie Triphenylmethan-4,4′,4˝-triisocyanat und Tris-(4-isocyanatophenyl)-thiophosphat verwendet. Eine Vielzahl von Isocyanat-Komponenten für Polyurethan-Klebstoffe sind kommerziell erhältlich.

Als Polyole können sowohl niedermolekulare Verbindungen als auch Produkte mit höherem Molekulargewicht eingesetzt werden. Beispiele für niedermolekulare Verbindungen sind Glykole, Glycerin, Butandiol und Trimethylolpropan. Als Polyole mit höherem Molekulargewicht werden üblicherweise Polyether oder Polyesterpolyole verwendet. Ausgangssubstanzen zur Darstellung von vernetzten Polyester-Polyolen sind beispielsweise Adipinsäure, Phthalsäure, Butylenglykol, Glycerin und Hexantriol. Lineare Polyesterpolyole können durch Umsetzung von Adipinsäure mit Ethylenglykol dargestellt werden. Eine weitere Klasse von Polyolen auf Polyesterbasis ist auf der Basis von hydroxylhaltigem Polyacrylat zugänglich. Polyetherpolyole können durch Umsetzung von Epoxiden mit Alkoholen dargestellt werden. Als Alkohole können zum Beispiel Ethylenglykol, Diethylenglykol, Propylenglykol, Glycerin, Trimethylolpropan, Pentaerythrit, Sorbit, Mannit, Saccharose und Alkylglucoside eingesetzt werden. Als Epoxide können eingesetzt werden beispielsweise Ethylenoxid, Propylenoxid, Butylenoxid, Styroloxid, Cyclohexenoxid, Trichlorbutylenoxid und Epichlorhydrin. Anstelle eines Epoxids kann aber auch Tetrahydrofuran eingesetzt werden. Neben Polyethern und Polyestern können auch Naturstoffe als Polyolkomponete eingesetzt werden, beispielsweise Rizinusöl. Eine Vielzahl von Polyetherpolyolen und Polyesterpolyolen, auch speziell zur Darstellung von Polyurethanen, sind im Handel erhältlich.

Die irreversible Aushärtung des Klebstoffs beginnt dann, wenn der Polyurethan-Schmelzklebstoff bei der Applizierung mit Feuchtigkeit, nach dem Stand der Technik Luftfeuchtigkeit, nach dem erfindungsgemäßen Verfahren mit vom Aktivator abgegebenen Wasser, in Berührung kommt. H.F. Huber und H. Müller berichteten auf dem 11. Münchener Klebstoff- und Veredelungs-Seminar, Oktober 1986, über feuchtigkeitshärtende Schmelzkleber, die durch Umsetzung der freien NCO-Gruppen von Prepoylmeren mit Aminoalkyltrialkoxy-Silanen erhalten werden. In diesem Fall findet die feuchtigkeitsinduzierte Aushärtung durch Reaktion der Trialkoxy-Silanendgruppen zu Siloxangruppen statt. Als Beispiel für diese feuchtigkeitshärtenden Silan-Schmelzklebstoffe wurden in diesem Vortrag Verbindungen vorgestellt, die aus einem Polyester mit freien OH-Gruppen aufgebaut sind, wobei letztere zunächst mit mehrfunktionellen Isocyanaten im Überschuß umgesetzt wurden und die danach vorhandenen freien NCO-Gruppen anschließend mit Aminoalkyltrialkoxy-Silanen.

Besonders bevorzugt im Rahmen des erfindungsgemäßen Verfahrens werden feuchtigkeitsvernetzende Schmelzklebstoffe, wie sie in der deutschen Patentanmeldung P 37 14 763.3 (D 7652) beschrieben wurden. Es handelt sich dabei um silanisierte Polyamide, die auf dem folgenden Wege erhalten werden können: Durch Umsetzung eines Diisocyanids der Formel I

OCN-R¹-NCO (I)

mit einem Alkoxy-alkylenamino- oder Mercaptosilan der Formeln IIa bzw. IIb 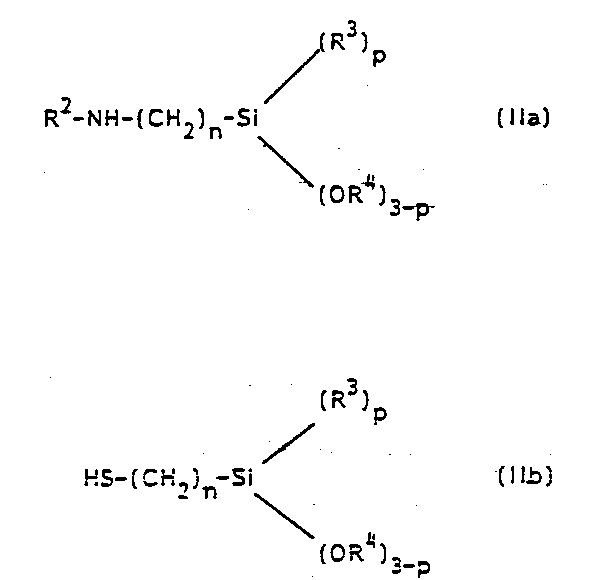
sind Harnstoffderivate der allgemeinen Formel III 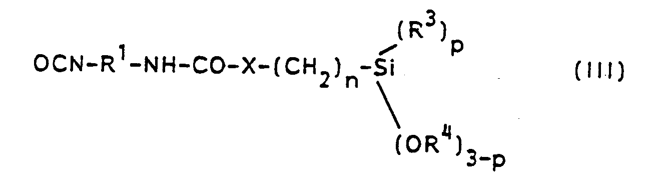
zugänglich, die durch Umsetzung im wesentlichen sämtlicher freien Aminogruppen oder Carboxylgruppen eines Polyamids bzw. carboxylterminierten Polyamids der Formeln IVa bzw. IVb

Polyamid-(NH₂)ₓ (IVa)

Polyamid-(COOH)ₓ (IVb)

zu einem trialkoxysilanterminierten Polyamid der Formel Va bzw. Vb reagieren.

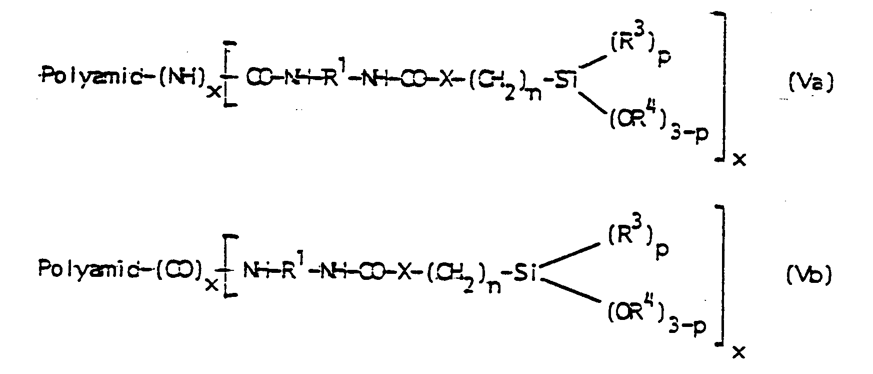

Die einzelnen Gruppen sind dabei wie folgt definiert:
R¹: C₅ - C₁₄-Alkylen, Arylen, Diarylenalkan oder dialkylen-substituiertes Aryl
R²: Wasserstoff, C₁-C₄-Alkyl, Aryl oder ein Rest der Formel 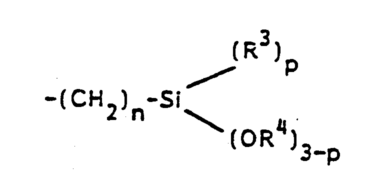
wobei n eine Zahl von 1-4, R³ eine C₁-C₄-Alkylgruppe, R⁴ ein Rest aus der von C₁-C₄-Alkyl und Alkoxyalkylen mit 2 - 4 Kohlenstoffatomen gebildeten Gruppe und p eine Zahl von 0, 1 oder 2 ist.
X : -NH- oder -S-
x : eine Zahl, die für die Polyamide Amin- bzw. Säurezahlen zwischen 5 und 50 ergibt.

Als Polyamide können Homopolyamide, Copolyamide, Polyamid-Legierungen, sogenannte elastomere Polyamide sowie Polyamide mit einem Gehalt an deren Thermoplasten eingesetzt werden. Bezüglich der weiteren Einzelheiten dieser im Rahmen des erfindungsgemäßen Verfahrens besonders bevorzugten Schmelzklebstoffsysteme wird ausdrücklich auf den Inhalt der in der Anmeldung P 37 14 763.3 (D 7652) dargelegten Lehre verwiesen.

Die in einer weiteren Ausführungsform des erfindungsgemäßen Verfahrens verwendeten Fugendichtmassen entsprechen von der chemischen Struktur her im wesentlichen den geschilderten Schmelzklebstoffen. Bei den in einer bevorzugten Ausführungsform des erfindungsgemäßen Verfahrens verwendeten Fugendichtmassen handelt es sich um Mischungen mit Polyurethan-Prepolymeren. Diese Polyurethan-Prepolymeren werden durch Umsetzung von Polyether- und/oder Polyesterpolyolen mit Di-, Tri- oder Polyisocyanaten erhalten. Als Polyole und Isocyanate werden im wesentlichen die gleichen Substanzen eingesetzt, die auch zur Darstellung von Polyurethan-Prepolymeren für Schmelzklebstoffe Verwendung finden. In diesem Zusammenhang wird auf die oben gemachten Ausführungen sowie die allgemein zugängliche Fachliteratur verwiesen. Neben den Polyurethan-Prepolymeren können die für das erfindungsgemäße Verfahren verwendeten Polyurethan-Dichtungsmassen noch weitere Bestandteile enthalten. Als Weichmacher können Alkylsulfonsäureester von Phenol und Kresol, Benzylbutylphthalat oder Trioctylphosphat dienen, als Härter polymere Isocyanate, Aldimine und Ketimine. Übliche Katalysatoren zur Reaktionsbeschleunigung sind Dibutylzinn-dilaurat, -diacetat und -diversatat sowie Zinn(II)-octoat, als Füllstoffe finden pyrogene Kieselsäuren, Ruß, Calciumcarbonat Verwendung, als Pigmente Titandioxid, Eisenoxid und Ruß. Daneben können noch die bekannten Substanzen als Trockner, Stabilisatoren und Haftvermittler in den Fugendichtmassen eingesetzt werden.

Durch Zugabe von Aktivatormaterialien im Rahmen des erfindungsgemäßen Verfahrens wird eine gegenüber dem Stand der Technik erhöhte Haftfestigkeit von feuchtigkeitsnachvernetzenden Schmelzklebstoffen bzw. Fugendichtmassen beim Verkleben bzw. Abdichten von Wasserdampf undurchlässigen Substraten erzielt.

Die Erfindung wird im folgenden anhand bevorzugter Ausführungsbeispiele näher erläutert:

### Beispiele

### Beispiel 1:

Zur Bestimmung der Zugscherfestigkeit von Verklebungen mit Schmelzklebstoffen wurden sandgestrahlte Aluminium-Prüfkörper der Abmessungen 100 x 25 x 2 mm verwendet. Die Prüfkörper wurden mit Lösungen oder Suspensionen (5 % Aktivatormaterial in Wasser) der Aktivatormaterialien bestrichen und an der Luft getrocknet. Anschließend wurde der Klebstoff aus der Schmelze aufgetragen. Als Polyurethan-Schmelzklebstoff wurde das kommerziell erhältliche Produkt Bostik Supergrip® 9802 verwendet, für das bei 100 °C eine Schmelzviskosität von 18 Pa·s und ein NCO-Gehalt von 1,8 g NCO/100 g Festsubstanz bestimmt wurde.

Nach 24 Stunden wurden die Prüfkörper bei 100 °C mit einer Zerreißmaschine zerrissen und die Zugscherfestigkeit nach DIN 53 283 bestimmt. Die Ergebnisse sind in Tabelle I dargestellt.

**Tabelle I**

| Aktivatormaterial | Zugscherfestigkeit bei 100 °C (N/mm²) nach 24 Stunden |
|---|---|
| -- | 0,3 |
| Zeolith A | 2,0 |
| Na₂CO₃ x 10 H₂O | 1,1 |
| CaSO₄ x 2 H₂O | 1,5 |
| Ca(CH₃COO)₂ x 2 H₂O | 1,1 |
| CuSO₄ x 5 H₂O | 1,2 |
| FeSO₄ x 7 H₂O | 1,1 |
| Na₂SiO₃ x 9 H₂O | 1,0 |
| Mg₃(PO₄)₂ x 5 H₂O | 1,1 |
| Calciumlactat x 5 H₂O | 1,2 |
| Na₂SO₄ x 10 H₂O | 0,7 |

### Beispiel 2:

Der Einfluß der Menge des Aktivatormaterials auf die Zugscherfestigkeit wurde am Beispiel des Zeolith A bestimmt. Der Zeolith A wurde jeweils aus 5 %iger wässriger Suspension aufgetragen; Klebstoff, Prüfkörper und Meßverfahren analog zu Beispiel 1. Die Ergebnisse finden sich in Tabelle II.

**Tabelle II**

| g Zeolith A (Festsubstanz)/m² zu verklebender Fläche | Zugscherfestigkeit bei 100 °C (N/mm²) nach 24 Stunden |
|---|---|
| 0 | 0,3 |
| 0,56 | 0,8 |
| 1,6 | 1,5 |
| 3,2 | 1,9 |
| 12 | 2,3 |
| 25 | 2,0 |
| 64 | 0,6 |

### Beispiel 3:

Die Fixierung des Aktivatormaterials auf dem Substrat wurde durch Zusatz eines Bindemittels variiert. Als Aktivatormaterial wurde Zeolith A und als Bindemittel Celluloseacetobutyrat eingesetzt, die mit Hilfe eines organischen Lösemittels (Aceton) auf das Substrat aufgetragen wurden. Prüfkörper und Klebstoff entsprechen Beispiel 1. Die Ergebnisse sind in Tabelle III dargestellt.

**Tabelle III**

| Aceton (g) | Aktivatormaterial Zeolith A (g) | Celluloseacetobutyrat (g) | Zugscherfestigkeit bei 100 °C (n/mm²) nach 24h |
|---|---|---|---|
| 99 | 0,1 | 1,0 | 0,7 |
| 98 | 1,0 | 1,0 | 1,3 |
| 94 | 5,0 | 1,0 | 1,8 |
| 89 | 10,0 | 1,0 | 1,4 |

### Beispiel 4:

Ein Polyamid aus dimerisierter Fettsäure, Azelainsäure, Ethylendiamin und Piparazin mit einer Aminzahl von 35 - 50 einer Säurezahl kleiner 1 und einer Schmelzviskosität von 1,6 Pa·s bei 160 °C wird, wie in der deutschen Patentanmeldung (Aktenzeichen P 37 14 763.3), Beispiel 1, beschrieben, mit einem Alkoxysilan modifiziert. Das Produkt wird als Klebstoff in dem erfindungsgemäßen Verfahren verwendet und der Einfluß des Aktivatormaterials durch Messung der Wärmestandfestigkeit der Verklebung bestimmt. Dazu wurden zwei 25 mm breite Streifen aus Aluminium (2 mm stark) überlappend verklebt (25 mm), wobei als Aktivatormaterial Zeolith A aus 5 %iger, wässriger Suspension aufgetragen wird, dem in einem Versuch 0,3 % Methylcellulose zugefügt wurde. Die Verklebung wurde mit 1,36 kg parallel zur Klebefläche belastet und in einem Umluftwärmeschrank einem Temperaturanstieg von 5 °C/10 min ausgesetzt. Als Wärmestandfestigkeit wird die Temperatur bezeichnet, bei der sich die Verklebung noch nicht löst. Die Ergebnisse sind in Tabelle IV zusammengestellt.

**Tabelle IV**

| Aktivator | Wärmestandfestigkeit (°C) nach 24 Stunden |
|---|---|
| - | 100 |
| Zeolith A | größer 200 |
| Zeolith A + Methylcellulose | größer 200 |

### Beispiel 5:

Zur Bestimmung des Einflusses des Aktivatormaterials auf die Durchhärtung von Polyurethan-Fugendichtmassen wurden 4 g eines groben Pulvers von mit Wasser gesättigtem Zeolith A auf dem Boden eines Aluminiumschälchens (8 cm Durchmesser) verteilt und mit Polyurethan-Fugendichtmasse (Sista® F 120) bedeckt. Die Durchhärtung der Fugendichtmasse vom Boden her wurde mit der Durchhärtung der gleichen Fugendichtmasse verglichen, deren Oberfläche der Luftfeuchtigkeit ausgesetzt ist. Die Ergebnisse sind in Tabelle V zusammengestellt.

**Tabelle V**

| Zeit (Tage) | Durchhärtungsweg unter Luftauschluß mit Aktivatormaterial | Durchhärtungsweg unter dem Einfluß der Luftfeuchtigkeit |
|---|---|---|
| 1 | 2 - 3 mm | 1 - 2 mm |
| 2 | 4 - 5 mm | 4 - 5 mm |
| 3 | 6 mm | 6 - 5 mm |
| 4 | 9 - 10 mm | 7 mm |

### Beispiel 6:

5 g des wasserfreien Aktivatormaterials wurden pulverisiert und sofort mit 45 g getrocknetem Aceton versetzt. Diese Mischung wurde auf sandgestrahlte und entfettete Aluminiumprüfkörper der Abmessung 100 x 25 x 2 mm aufgetragen. Nach dem Verdampfen des Acetons wurden die Prüfkörper eine Woche an der Luft belassen, und danach mit einem Schmelzklebstoff (Bostik Supergrip® 9802) verklebt. Die ermittelten Zugscherfestigkeiten sind in Tabelle VI aufgeführt.

**Tabelle VI**

| Aktivatormaterial | Zugscherfestigkeit bei 100 °C (N/mm²) nach 1 Woche |
|---|---|
| Zeolith A | 1,7 |
| CuSO₄ | 0,9 |
| Na₂SO₄ | 1,0 |
| Na₂CO₃ | 1,1 |

## Patentansprüche

1. Verfahren zum Verkleben und Abdichten von wasserdampfundurchlässigen Substraten mit unter Feuchtigkeitseinwirkung nachvernetzenden Schmelzklebstoffen oder Fugendichtmassen, dadurch gekennzeichnet, daß man
- in einem ersten Verfahrensschritt ein Aktivatormaterial als Festsubstanz, Suspension und/oder Lösung in einem Lösungsmittel auf zumindest eine der zu verklebenden oder abzudichtenden Substratoberflächen aufbringt,
- anschließend das Lösungsmittel, so vorhanden, durch Trocknen entfernt und danach
- in üblicher Weise einen Schmelzklebstoff bzw. eine Fugendichtmasse einsetzt,
wobei als Aktivatormaterial eine bei der Verarbeitungstemperatur zur Abgabe von 0,5 bis 25 Gew.-% chemisch oder adsorptiv gebundenem Wasser befähigte Substanz eingesetzt wird.

2. Verfahren nach Anspruch 1, dadurch gekennzeichnet, daß als Aktivatormaterial eine Substanz eingesetzt wird, die 1 bis 10 Gew.-% gebundenes Wasser abgibt.

3. Verfahren nach einem der Ansprüche 1 und 2, dadurch gekennzeichnet, daß man das Aktivatormaterial in solchen Mengen aufträgt, daß die unbedeckte Oberfläche mehr als 50 %, insbesondere mehr als 80 %, beträgt.

4. Verfahren nach einem der Ansprüche 1 bis 3, dadurch gekennzeichnet, daß als Aktivatormaterial Kristallwasser-haltige, lufttrockene Oxide, Hydroxide oder Salze der Alkalimetalle, Erdalkalimetalle, Metalle der III. Hauptgruppe oder Nebengruppenelemente eingesetzt werden.

5. Verfahren nach einem der Ansprüche 1 bis 4, dadurch gekennzeichnet, daß als Aktivatormaterial wasserbeladener, lufttrockener Zeolith insbesondere Zeolith A, Kristallwasser-haltiges Eisensulfat oder Kristallwasser-haltiges Bariumhydroxid eingesetzt wird.

6. Verfahren nach einem der Ansprüche 1 bis 3, dadurch gekennzeichnet, daß als Aktivatormaterial gebundenes Wasser enthaltende hydrophile Polymere wie Cellulosederivate, Stärkederivate, Polyacrylamid und/oder Polyvinylpyrrolidon eingesetzt werden.

7. Verfahren nach einem der Ansprüche 1 bis 6, dadurch gekennzeichnet, daß das Aktivatormaterial, wenn wasserunlöslich, in Wasser dispergiert eingesetzt wird, und daß als Stabilisatoren wasserlösliche Polymere mit verdickender Wirkung eingesetzt werden.

8. Verfahren nach einem der Ansprüche 1 bis 7, dadurch gekennzeichnet, daß die wässrigen Dispersionen des Aktivatormaterials 1 bis 90, vorzugsweise 10 bis 50 und besonders bevorzugt 10 bis 20 Gew.-%, Aktivatormaterial enthalten.

9. Verfahren nach einem der Ansprüche 1 bis 8, dadurch gekennzeichnet, daß die wässrigen Dispersionen des Aktivatormaterials als Stabilisatoren wasserlösliche Polymere mit verdickender Wirkung, insbesondere Celluloseether oder Polyvinylalkohol, enthalten.

10. Verfahren nach einem der Ansprüche 1 bis 6, dadurch gekennzeichnet, daß das Aktivatormaterial als Dispersion in einem organischen Lösungsmittel, vorzugsweise in einem aliphatischen Alkohol mit 1 bis 5 C-Atomen oder in einem Keton mit 3 bis 5 C-Atomen, eingesetzt wird.

11. Verfahren nach Anspruch 1 - 6 und 10, dadurch gekennzeichnet, daß die Dispersionen des Aktivatormaterials in dem organischen Lösungsmittel als Stabilisatoren in dem Lösungsmittel lösliche Polymere, insbesondere Celluloseester, enthalten.

12. Verfahren nach einem der Ansprüche 1 bis 11, dadurch gekennzeichnet, daß als feuchtigkeitshärtende Schmelzklebstoffe thermoplastische Polymere mit Isocyanat- und/oder Silan- und/oder Siloxan-Endgruppen eingesetzt werden.

13. Verfahren nach einem der Ansprüche 1 bis 11, dadurch gekennzeichnet, daß als feuchtigkeitshärtende Fugendichtmasse Mischungen mit Polyurethan-Prepolymeren eingesetzt werden.

## Claims

1. A process for bonding and/or sealing substrates impermeable to water vapour with hotmelt adhesives or joint sealing compounds post-crosslinking under the effect of moisture, characterized in that
- in a first step, an activator material is applied in the form of a solid, suspension and/or solution in a solvent to at least one of the substrate surfaces to be bonded or sealed,
- the solvent thus present is then removed by drying, after which
- a hotmelt or a joint sealing compound is used in the usual way,
a substance capable of releasing 0.5 to 25% by weight chemically or adsorptively bound water at application temperatures being used as the activator material.

2. A process as claimed in claim 1, characterized in that a substance which releases 1 to 10% by weight bound water is used as the activator material.

3. A process as claimed in claim 1 or 2, characterized in that the activator material is applied in such quantities that more than 50% and, in particular, more than 80% of the surface is not covered.

4. A process as claimed in any of claims 1 to 3, characterized in that air-dry oxides, hydroxides or salts containing water of crystallization of the alkali metals, alkaline earth metals, metals of the IIIrd main group or secondary group elements are used as the activator material.

5. A process as claimed in any of claims 1 to 4, characterized in that air-dry zeolite, particularly zeolite A, charged with water, iron sulfate containing water of crystallization or barium hydroxide containing water of crystallization is used as the activator material.

6. A process as claimed in any of claims 1 to 3, characterized in that hydrophilic polymers containing bound water, such as cellulose derivatives, starch derivatives, polyacrylamide and/or polyvinyl pyrrolidone, are used as the activator material.

7. A process as claimed in any of claims 1 to 6, characterized in that, where it is insoluble in water, the activator material is used in dispersion in water and in that water-soluble polymers having a thickening effect are used as stabilizers.

8. A process as claimed in any of claims 1 to 7, characterized in that the aqueous dispersions of the activator material contain 1 to 90% by weight, preferably 10 to 50% by weight and more preferably 10 to 20% by weight of activator material.

9. A process as claimed in any of claims 1 to 8, characterized in that the aqueous dispersions of the activator material contain water-soluble polymers having a thickening effect, more especially cellulose ethers or polyvinyl alcohol as stabilizers.

10. A process as claimed in any of claims 1 to 6, characterized in that the activator material is used in the form of a dispersion in an organic solvent, preferably in an aliphatic C₁₋₅ alcohol or in a C₃₋₅ ketone.

11. A process as claimed in claims 1 to 6 and 10, characterized in that the dispersions of the activator material in the organic solvent contain polymers soluble in the solvent, more especially cellulose esters, as stabilizers.

12. A process as claimed in any of claims 1 to 11, characterized in that thermoplastic isocyanate-terminated and/or silane-terminated and/or siloxane-terminated polymers are used as moisture-curing hotmelts.

13. A process as claimed in any of claims 1 to 11, characterized in that mixtures with polyurethane prepolymers are used as moisture-curing joint sealing compounds.

## Revendications

1. Procédé d'encollage et d'étanchéité de substrats imperméables à l'eau avec des colles de fusion ou des masses d'étanchéité par jointoiement qui se réticulent finalement par action de l'humidité, caractérisé en ce que :
- l'on applique dans un premier stade du procédé un produit activateur sous forme de substance solide, de suspension et/ou de solution dans un solvant, sur au moins une des surfaces de substrat à encoller ou à isoler ;
- l'on chasse ensuite le solvant ainsi présent, par séchage et ensuite ;
- l'on met en jeu d'une manière habituelle une colle de fusion ou une masse d'étanchéité par jointoiement.
procédé dans lequel on met en oeuvre comme produit activateur une substance capable de relâcher de 0,5 à 25% en poids d'eau liée chimiquement ou par adsorption à température de façonnage.

2. Procédé selon la revendication 1, caractérisé en ce que comme produit activateur, on met en oeuvre une substance qui relâche de 1 à 10% en poids d'eau liée.

3. Procédé selon l'une des revendications 1 et 2, caractérisé en ce que l'on applique le produit activateur en quantités telles, que la surface non recouverte s'élève à plus de 50%, en particulier à plus de 80%.

4. Procédé selon l'une des revendications 1 à 3, caractérisé en ce que comme produit activateur, on met en oeuvre des oxydes, des hydroxydes ou des sels de métaux alcalins, de métaux alcalino-terreux, de métaux du troisième groupe principal ou d'éléments des sous-groupes séchés à l'air, renfermant de l'eau de cristallisation.

5. Procédé selon l'une des revendications 1 à 4, caractérisé en ce que comme produit activateur, on met en oeuvre une zéolite séchée à l'air, chargée d'eau, en particulier de la zéolite A, du sulfate de fer renfermant de l'eau de cristallisation, ou de l'hydroxyde de baryum renfermant de l'eau de cristallisation.

6. Procédé selon l'une des revendications 1 à 3, caractérisé en ce que comme produit activateur, on met en oeuvre des polymères hydrophiles renfermant de l'eau liée, comme des dérivés de la cellulose, des dérivés de l'amidon, du polyacrylamide et/ou de la polyvinylpyrolidone.

7. Procédé selon l'une des revendications 1 à 6, caractérisé en ce que le produit activateur lorsqu'il est insoluble dans l'eau, est mis en jeu dispersé dans l'eau, et en ce que l'on met en jeu comme agents stabilisants, des polymères solubles dans l'eau ayant une action épaississante.

8. Procédé selon l'une des revendications 1 à 7, caractérisé en ce que les dispersions aqueuses du produit activateur renferment de 1 à 90, de préférence de 10 à 50 et d'une manière particulièrement préférée de 10 à 20 % en poids de produit activateur.

9. Procédé selon l'une des revendications 1 à 8, caractérisé en ce que les dispersions aqueuses du produit activateur renferment comme stabilisants des polymères solubles dans l'eau ayant une action épaississante, en particulier des éthers de cellulose ou de l'alcool polyvinylique.

10. Procédé selon l'une des revendications 1 à 6, caractérisé en ce que le produit activateur est mis en oeuvre sous forme de dispersion dans un solvant organique, de préférence dans un alcool aliphatique ayant de 1 à 5 atomes de carbone, ou dans une cétone ayant de 3 à 5 atomes de carbone.

11. Procédé selon les revendications 1 à 6 et 10, caractérisé en ce que les dispersions du produit activateur dans le solvant organique renferment comme stabilisants, des polymères solubles dans le solvant, en particulier de l'ester de cellulose.

12. Procédé selon l'une des revendications 1 à 11, caractérisé en ce que l'on met en oeuvre comme colle de fusion qui durcit à l'humidité, des polymères thermoplastiques ayant des groupements terminaux isocyanate et/ou silane et/ou siloxane.

13. Procédé selon l'une des revendications 1 à 11, caractérisé en ce que l'on met en oeuvre comme masse d'étanchéité par jointoiement, des mélanges avec des prépolymères de polyuréthanne.
